# EUROPÄISCHE PATENTSCHRIFT

(11) **EP 2 960 099 B1**
(45) Veröffentlichungstag und Bekanntmachung des Hinweises auf die Patenterteilung: **17.03.2021**
(21) Anmeldenummer: 15164671.8
(22) Anmeldetag: 22.04.2015
(51) Int. Cl.: B60K 37/06, G06F 3/041

(54) **ANWENDERSCHNITTSTELLE UND VERFAHREN ZUM ANPASSEN EINER EINSTELLUNG EINES FORTBEWEGUNGSMITTELS MITTELS EINER ANZEIGEEINHEIT EINER ANWENDERSCHNITTSTELLE**
USER INTERFACE AND METHOD FOR ADJUSTING A SETTING OF A MEANS OF TRANSPORT BY MEANS OF A DISPLAY UNIT OF A USER INTERFACE
INTERFACE UTILISATEUR ET PROCÉDÉ D'ADAPTATION D'UN RÉGLAGE D'UN MOYEN DE DÉPLACEMENT À L'AIDE D'UNE UNITÉ D'AFFICHAGE D'UNE INTERFACE UTILISATEUR

(30) Priorität: 13.06.2014 DE 102014211349
(43) Veröffentlichungstag der Anmeldung: 30.12.2015
(73) Patentinhaber: Volkswagen Aktiengesellschaft, 38440 Wolfsburg (DE)
(72) Erfinder: Kögler, Indra-Lena, 10829 Berlin (DE); Kuhn, Mathias, 14129 Berlin (DE); Chudzinski, Filip Piotr, 10557 Berlin (DE); Hahn, Alexander, 38104 Braunschweig (DE); Petersen, Sönke, 12205 Berlin (DE); Yosha, Omer, 10827 Berlin (DE)

(56) Entgegenhaltungen:
- EP-A1- 2 460 694
- EP-A1- 2 838 002
- WO-A1-2013/154194
- DE-A1- 10 350 345
- DE-A1-102009 056 675

## Beschreibung

### Stand der Technik

Die vorliegende Erfindung betrifft eine Anwenderschnittstelle sowie ein Verfahren zum Anpassen einer Einstellung eines Fortbewegungsmittels mittels einer Anzeigeeinheit einer Anwenderschnittstelle. Insbesondere betrifft die vorliegende Erfindung eine komfortable seitenspezifische bzw. sitzpositionsspezifische Anpassung der Einstellung.

Fortbewegungsmittel weisen meist eine Vielzahl von Funktionen auf, welche sich auf eine erste Sitzposition und/oder eine zweite Sitzposition auswirken. Sofern unterschiedliche Auswirkungen gewünscht sind, besteht oftmals die Möglichkeit, der Sitzposition des Fahrers andere Einstellungen zuzuweisen als anderen Sitzpositionen (z. B. des Beifahrers). Ein Beispiel hierfür ist die Heizungs-/Klimatisierungsfunktion eines Fortbewegungsmittels. Sitzpositionsspezifische Bedienelemente ermöglichen einerseits zwar eine unterschiedliche Einstellung für unterschiedliche Sitzpositionen, andererseits verkomplizieren sie die gemeinsame Anpassung von Einstellungen an mehr als einer Sitzposition im Fortbewegungsmittel. Möchte der Fahrer beispielsweise eine möglichst rasche Abkühlung des Innenraums bewirken, sind die Einstellungen für sämtliche Sitzpositionen im Fahrzeug anzupassen, um z.B. auch die beifahrerseitigen Luftauslässe und Klimatisierungsoptionen für den gewünschten Zweck zu verwenden.

DE 10 2010 010 441 A1 offenbart ein Belüftungs- und Klimasystem eines Kraftfahrzeugs, welches eine Vielzahl von Einstellungsmöglichkeiten für die Temperatur- und Luftströmungsanpassung im Innenraum eines Fahrzeugs ermöglicht. Zur Steuerung ist ein Touchscreen vorgesehen, auf welchem unterschiedliche Bedienfelder und -elemente zur Informationswiedergabe und - entgegennahme angezeigt werden können. Eine sitzpositionsspezifische Anpassung der möglichen Einstellungen ist hingegen nicht vorgesehen.

WO 2013/154194 A1 und EP 2 838 002 A1 offenbaren eine für automobile Anwendungen vorgesehene Anzeigeeinrichtung, bei welcher in Abhängigkeit einer Handposition eines Anwenders eine Anzeigeposition eines sogenannten "Softkeys" variiert wird, um eine bequeme Ablesbarkeit desselben für den Anwender zu gewährleisten.

DE 102009056675 A1 offenbart eine Bedieneinheit für eine Klimatisierungsvorrichtung für einen Sitz, insbesondere in einem Fahrzeug. Sie umfasst ein Bedienelement zur Einstellung von Parametern der Klimatisierungsvorrichtung, eine Anzeigevorrichtung, auf der Parametern der Klimatisierungsvorrichtung darstellbar sind, und eine Steuereinheit, die mit dem Bedienelement und der Anzeigevorrichtung gekoppelt ist und mit der die Anzeige auf der Anzeigevorrichtung steuerbar ist. Dabei steuert die Steuereinheit die Anzeigevorrichtung so, dass auf eine Betätigung des Bedienelements Schaltflächen zum Einstellen der Parameter der Klimatisierungsvorrichtung auf der Anzeigevorrichtung darstellbar sind.

EP 2 460 694 A1 offenbart ein Betriebssystem für ein Fahrzeug umfassend eine Anzeigeeinheit, an der ein Temperatureinstellungszeichen dargestellt ist, das den Temperaturwert zeigt. Wenn das Temperatureinstellungszeichen ausgewählt oder betätigt wird, wird ein Auswahlfenster entsprechend gezeigt. Insbesondere wird das Auswahlfester erst erscheinen, um den Temperaturwert mit zwei Pfeilen und ein Zeichen zum Umschalten auf "SINGLE MODE" zu zeigen. Wenn das Zeichen ausgewählt oder betätigt wird, ersetzt ein Auswahlfenster das andere Auswahlfenster.

Eine Anpassung von Einstellungen von Fahrzeugfunktionen über sitzpositionsspezifische Bedienfelder für eine Vielzahl von Sitzpositionen in einem Fortbewegungsmittel bedingt im Stand der Technik somit das Erfordernis einer Vielzahl von Bedienhandlungen, wodurch die Aufmerksamkeit des Anwenders beansprucht wird. Dieses bedingt Komfort- und Fahrsicherheitseinbußen. Es ist daher eine Aufgabe der vorliegenden Erfindung, die vorstehend identifizierten Nachteile des Standes der Technik zu beheben.

### Offenbarung der Erfindung

Die vorstehend genannte Aufgabe wird erfindungsgemäß durch ein Verfahren mit den Merkmalen gemäß Anspruch 1 und durch ein Verfahren mit den Merkmalen gemäß Anspruch 2 sowie durch eine Anwenderschnittstelle mit den Merkmalen gemäß Anspruch 8 gelöst. Weiter werden zur Lösung der Aufgabe ein Computerprogrammprodukt, eine Signalfolge und ein Fortbewegungsmittel vorgeschlagen.

Das erfindungsgemäße Verfahren dient dem Anpassen einer Einstellung eines Fortbewegungsmittels mittels einer Anzeigeeinheit einer Anwenderschnittstelle des Fortbewegungsmittels. Die Einstellung kann beispielsweise eine komfortbezogene Innenraumfunktion sein, welche in Abhängigkeit der betrachteten Sitzposition unterschiedlich ausfallen kann. Die Anzeigeeinheit kann beispielsweise ein Kombiinstrument, ein zentrales Informationsdisplay im Armaturenbrett, ein Flap-Display oder eine andere geeignete optische Wiedergabeeinrichtung sein. Insbesondere kann die Anzeigeeinheit eine berührungsempfindliche Oberfläche zur Entgegennahme von Anwendereingaben umfassen. In einem ersten Schritt wird ein erstes Bedienelement zur Bedienung der Einstellung für die Fahrerposition oder für die Beifahrerposition des Fortbewegungsmittels auf der Anzeigeeinheit dargestellt. Das erste Bedienelement kann als so genannter Soft-Key, als Schieberegler, als Drehregler oder in Form von Pfeiltasten o.ä. ausgestaltet und eingerichtet sein, die Einstellung im Ansprechen auf eine Anwendereingabe anzupassen. Zusätzlich wird eine vordefinierte Schaltfläche auf der Anzeigeeinheit dargestellt, über welche der Anwender die Möglichkeit hat, den Wunsch nach einer synchronisierten Anpassung der Einstellung für mehrere Sitzpositionen vorzunehmen. Anschließend wird eine Anwendereingabe bezüglich der vordefinierten Schaltfläche empfangen. Mit anderen Worten wählt der Anwender die Option zur synchronisierten Anpassung der Einstellung für mehrere Sitzpositionen aus. Im Ansprechen darauf wird ein zweites Bedienelement zur Bedienung der Einstellung für die Fahrerseite und die Beifahrerseite des Fortbewegungsmittels dargestellt. Eine Anwendereingabe bezüglich des zweiten Bedienelementes ist also dafür vorgesehen, eine synchronisierte Anpassung der Einstellung sowohl für die Fahrerseite als auch für die Beifahrerseite zu ermöglichen. Im Gegensatz dazu ist das erste Bedienelement für eine Anpassung der Einstellung entweder für die Fahrerseite oder für die Beifahrerseite vorgesehen. Das Betätigen der vordefinierten Schaltfläche vereinfacht somit die Anpassung der Einstellung für mindestens zwei unterschiedliche Sitzpositionen und/oder Fahrzeugseiten. Dieses verringert je nach Bedienszenario die Anzahl erforderlicher Bedienschritte, wodurch der Anwenderkomfort und die Fahrsicherheit begünstigt werden.

Die Unteransprüche zeigen bevorzugte Weiterbildungen der Erfindung.

Erfindungsgemäß ist nicht ausgeschlossen, dass gleichzeitig zum ersten Bedienelement auch ein drittes Bedienelement auf der Anzeigeeinheit dargestellt werden kann, über welches die Anpassung der Einstellung für eine nicht durch das erste Bedienelement bedienbare Seite oder Sitzposition des Fortbewegungsmittels erfolgen kann. Beispielsweise können das erste Bedienelement der Fahrerseite/position und das dritte Bedienelement der Beifahrerseite/position zugeordnet sein.

Bevorzugt kann die Darstellung des ersten Bedienelementes und/oder des dritten Bedienelementes im Ansprechen auf die Anwendereingabe bezüglich der vordefinierten Schaltfläche unterdrückt werden. Mit anderen Worten werden nach der Betätigung der vordefinierten Schaltfläche das erste Bedienelement und/oder das dritte Bedienelement nicht mehr dargestellt. Dieses erhöht die Übersichtlichkeit und ist insbesondere bei Verwendung kleiner Anzeigeeinheiten ratsam.

Das erste Bedienelement kann an einer ersten, insbesondere dezentralen, Position (z. B. links) auf der Anzeigeeinheit dargestellt werden. Eine intuitive Zuordnung zur Fahrerseite ist somit begünstigt. Entsprechendes gilt für das dritte Bedienelement, die rechte Seite der Anzeigeeinheit und die Beifahrerseite. Alternativ oder zusätzlich kann das zweite Bedienelement an einer zweiten, insbesondere zentralen Position auf der Anzeigeeinheit (Bildschirmmitte) dargestellt werden, um die Zuordnung zu beiden Fahrzeugseiten optisch intuitiv zu begünstigen.

Bevorzugt kann eine zweite vordefinierte Schaltfläche vorgesehen sein, im Ansprechen auf das Empfangen einer Anwendereingabe die Darstellung des ersten Bedienelementes zu unterdrücken, um anschließend wieder eine unterschiedliche Anpassung der Einstellung für die Fahrerseite und die Beifahrerseite vornehmen zu können. Hierzu kann im Ansprechen auf die Anwendereingabe bezüglich der zweiten vordefinierten Schaltfläche wieder das erste Bedienelement und alternativ oder zusätzlich das dritte Bedienelement dargestellt werden. Die Synchronisierung der Anpassung der Einstellung wird auf diese Weise aufgelöst. Selbstverständlich kann die zweite Schaltfläche im Wesentlichen identisch mit der ersten vordefinierten Schaltfläche und insbesondere hinsichtlich Position und Größe entsprechend gestaltet sein. Vorteilhaft ist jedoch eine unterschiedliche Beschriftung, so dass die unterschiedlichen Funktionen der vordefinierten Schaltflächen erkennbar werden.

Die Einstellung kann beispielsweise Funktionen betreffen, welche die Innenraumklimatisierung des Fortbewegungsmittels betrifft. Solche Funktionen sind auch als Heizlüftung, Sitzheizung, Lehnenheizung, Heizstrahler, Frischluftzufuhr, Umluftfunktion und/oder Sitzflächenklimatisierung bekannt. Die Einstellung der vorgenannten Funktionen kann erfindungsgemäß komfortabel sitzpositionsspezifisch oder gemeinsam für mehrere Sitzpositionen vorgenommen werden.

Besonders ergonomisch und platzsparend kann die vorliegende Erfindung bei Verwendung einer Annäherungserkennung implementiert werden. Wird die Annäherung eines Anwenders an einen Eingabebereich der Anwenderschnittstelle erkannt, kann im Ansprechen darauf die vordefinierte erste bzw. zweite Schaltfläche auf der Anzeigeeinheit dargestellt werden. Verlässt der Anwender den Annäherungsbereich, kann die Darstellung der vordefinierten Schaltfläche unterdrückt und die auf der Anzeigeeinheit zur Verfügung stehende Fläche anderweitig genutzt werden.

Bevorzugt kann vorgesehen sein, eine Annäherung eines Fahrers des Fortbewegungsmittels an einen Eingabebereich der Anwenderschnittstelle zu erkennen und insbesondere von einer Annäherung eines Beifahrers des Fortbewegungsmittels an den Eingabebereich der Anwenderschnittstelle zu unterscheiden. Je nachdem, von welcher Sitzposition eine Annäherung erfolgt, kann im Ansprechen auf die erkannte Annäherung eine vergrößerte Darstellung derjenigen Bedienelement bzw. Schaltflächen auf der Anzeigeeinheit erfolgen, welche der Anpassung der Einstellung für die jeweilige Fahrzeugseite zugeordnet ist. Insbesondere können das erste Bedienelement (für die Fahrerseite) oder das dritte Bedienelement (für die Beifahrerseite) vergrößert darstellt werden, sobald eine Annäherung des Fahrers bzw. des Beifahrers detektiert wird. Auf diese Weise vereinfacht sich die optische Orientierung des jeweiligen Anwenders und die Bedienung fällt aufgrund vergrößerter Schaltflächen und Skalen leichter aus.

Um beispielsweise Temperaturwerte und/oder Luftstromgeschwindigkeitswerte an die Anwenderwünsche anpassen zu können, sind unterschiedliche Bedienelemente möglich. Ein Beispiel stellen Inkrementiertasten bzw. Dekrementiertasten dar, welche häufig auch durch ein Plus-Symbol bzw. ein Minus-Symbol gekennzeichnet werden. Anwendereingaben bezüglich der vorgenannten Tasten erhöhen bzw. verringern die jeweils assoziierte Einstellung um eine vordefinierte Stufe.

Bevorzugt wird die Verwendung einer Annäherungserkennung vorgeschlagen, um das erste Bedienelement zur Bedienung der Einstellung für die Fahrerposition oder ein drittes Bedienelement zur Bedienung der Einstellung für die Beifahrerposition einzublenden. Mit anderen Worten wird in einem ersten Schritt die Annäherung eines Anwenders an die Anwenderschnittstelle erkannt und im Ansprechen darauf das erste Bedienelement und/oder das dritte Bedienelement dargestellt. Das erste Bedienelement bzw. das dritte Bedienelement kann bzw. können in Form eines Schiebereglers ausgestaltet sein, welcher im Ansprechen auf die Annäherungserkennung eingeblendet wird. Das erste Bedienelement bzw. das dritte Bedienelement kann dabei aus einem bereits vor der Annäherungserkennung dargestellten Anzeigeelement hervorgehen, welches beispielsweise lediglich zur Anzeige einer aktuellen Einstellung, nicht jedoch zur Anpassung der Einstellung vorgesehen ist. Für die Annäherungserkennung kann beispielsweise eine Infrarot-LED-Leiste verwendet werden, welche im Bereich einer Anzeigeeinheit der Anwenderschnittstelle und/oder in einer Mittelkonsole eines Fortbewegungsmittels angeordnet ist. Auf diese Weise kann bei Erkennung eines Anwenderwunsches zur Anpassung der Einstellung ein entsprechendes Bedienelement bereitgestellt und andernfalls die Oberfläche der Anzeigeeinheit für die Darstellung anderer Inhalte verwendet werden. Die Erläuterungen und Merkmale des ersten Erfindungsaspektes lassen sich derart ersichtlich auf die Merkmale des zweiten Erfindungsaspektes übertragen, dass zur Vermeidung von Wiederholungen auf die obigen Ausführungen verwiesen wird.

Bevorzugt wird die Verwendung einer sogenannten Multitouch-Anzeige vorgeschlagen, welche berührende Anwendereingaben an unterschiedlichen Oberflächenbereichen zeitgleich entgegennehmen und auswerten kann. Auf diese Weise ist es möglich, zeitgleich ein erstes Bedienelement zur Bedienung der Einstellung für die Fahrerposition des Fortbewegungsmittels und ein drittes Bedienelement zur Bedienung der Einstellung für die Beifahrerposition des Fortbewegungsmittels auf der Anzeigeeinheit darzustellen. Auch das erste und/oder das dritte Bedienelement kann einen Schieberegler (engl. "slider") umfassen, mittels dessen eine Anpassung der Einstellung für die Beifahrerposition zeitgleich, jedoch unabhängig von der Anpassung der Einstellung für die Fahrerposition vorgenommen werden kann. Beispielsweise können ein Beifahrer und ein Fahrer zeitgleich die Einstellung für ihre jeweilige Sitzposition anpassen. Alternativ kann ein und dieselbe Person die Einstellungen für beide Fahrzeugseiten zeitgleich, jedoch unabhängig voneinander anpassen.

In diesem Zusammenhang sei angemerkt, dass die Anwendereingabe nicht notwendigerweise durch eine berührende Eingabe auf einer Oberfläche der Anzeigeeinheit erfolgen muss. Lediglich eine Zuordnung der Anwendereingabe, welche beispielsweise als frei im Raum ausgeführte 3D-Geste erfolgen kann, zu dem jeweiligen Bedienelement, wird erfindungsgemäß verlangt. Zu möglichen Ausgestaltungen der Merkmale des dritten Erfindungsaspektes wird ebenfalls auf die Ausführungen zum ersten und zweiten Erfindungsaspekt verwiesen, um Wiederholungen zu vermeiden.

Gemäß einem weiteren Aspekt der vorliegenden Erfindung wird eine Anwenderschnittstelle für ein Fortbewegungsmittel vorgeschlagen. Die Anwenderschnittstelle umfasst eine Anzeigeeinheit, welche eingerichtet ist, ein erstes Bedienelement zur Bedienung einer Einstellung für eine Fahrerseite oder für eine Beifahrerseite des Fortbewegungsmittels darzustellen. Auch eine vordefinierte Schaltfläche zur Synchronisation von Anpassungen der Einstellung kann auf der Anzeigeeinheit angezeigt werden. Eine Eingabeeinheit, welche beispielsweise als berührungsempfindliche Oberfläche auf der Anzeigeeinheit ausgestaltet sein kann, ist eingerichtet, einen Anwenderbefehl bezüglich der vordefinierten Schaltfläche zu erfassen und beispielsweise an eine Auswerteeinheit weiterzuleiten. Im Ansprechen auf das Erfassen der Anwendereingabe kann die Anzeigeeinheit ein zweites Bedienelement zur Bedienung der Einstellung, sowohl für die Fahrerseite/position als auch für die Beifahrerseite/position des Fortbewegungsmittels darstellen. Auf diese Weise ist die erfindungsgemäße Anwenderschnittstelle eingerichtet, die Merkmale, Merkmalskombinationen und die sich aus diesen ergebenden Vorteile entsprechend dem erfindungsgemäßen Verfahren zu verwirklichen.

Gemäß einem fünften Erfindungsaspekt wird ein Computerprogrammprodukt (z. B. ein Datenspeicher) vorgeschlagen, auf welchem Instruktionen gespeichert sind, die einen programmierbaren Prozessor (z. B. einer Auswerteeinheit einer erfindungsgemäßen Anwenderschnittstelle) in die Lage versetzen, die Schritte eines Verfahrens gemäß dem erstgenannten Erfindungsaspekt auszuführen. Das Computerprogrammprodukt kann als CD, DVD, Blue-Ray-Disk, Flash-Speicher, Festplatte, RAM/ROM, Cache etc. ausgestaltet sein.

Gemäß einem weiteren Aspekt der vorliegenden Erfindung wird ein Fortbewegungsmittel (z. B. ein Fahrzeug, ein Pkw, ein Transporter, ein Lkw, ein Luft- und/oder Wasserfahrzeug) vorgeschlagen, welches eine Anwenderschnittstelle gemäß dem viertgenannten Erfindungsaspekt umfasst. Die Merkmale, Merkmalskombinationen und die sich aus diesen ergebenden Vorteile entsprechen den in Verbindung mit dem erst-, zweit-, dritt und viertgenannten Erfindungsaspekt ausgeführten derart ersichtlich, dass zur Vermeidung von Wiederholungen auf die obigen Ausführungen verwiesen wird.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Ansicht eines Ausführungsbeispiels eines erfindungsgemäßen Fortbewegungsmittels mit einem Ausführungsbeispiel einer erfindungsgemäßen Anwenderschnittstelle;
- Figur 2 - 5: Bildschirmdarstellungen ("Screenshots") einer Bedienoberfläche zur Anzeige auf einer Anzeigeeinheit einer Anwenderschnittstelle gemäß einem Ausführungsbeispiel der vorliegenden Erfindung;
- Figur 6: ein Flussdiagramm, veranschaulichend Schritte eines Ausführungsbeispiels eines erfindungsgemäßen Verfahrens, und
- Figur 7/8: schematische Darstellungen von Bedienschritten unter Verwendung einer Annäherungssensorik.

### Ausführungsformen der Erfindung

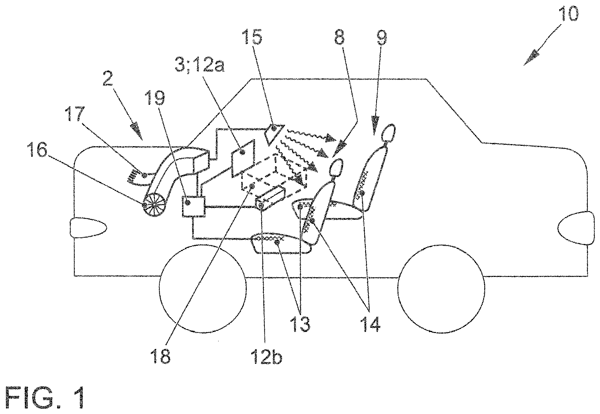

Figur 1 zeigt einen Pkw 10 als Fortbewegungsmittel, in welchem eine Anwenderschnittstelle 2 verbaut ist. Ein elektronisches Steuergerät 19 als Auswerteeinheit ist informationstechnisch mit den folgenden Komponenten verbunden: Ein Bildschirm 3 dient als Anzeigeeinheit und ist mit einer berührungsempfindlichen Oberfläche 12a als Teil einer Eingabeeinheit versehen. Ein zweiter Teil der Eingabeeinheit stellt eine Infrarot-LED-Leiste 12b dar, welche einen Erfassungsbereich 18 vor dem Bildschirm 3 aufspannt, innerhalb dessen der Anwender die auf dem Bildschirm 3 dargestellten Bedienelemente und Schaltflächen durch frei im Raum ausgeführte Gesten betätigen kann. Das Steuergerät 19 ist zudem imstande, einen Heizlüfter 16, eine Frischluftzufuhr 17, einen Heizstrahler 15 sowie Sitzheizungen 13 und Rückenlehnenheizungen 14 innerhalb von Sitzgelegenheiten an der Fahrerposition 8 und der Beifahrerposition 9 des Fortbewegungsmittels 10 anzusteuern.

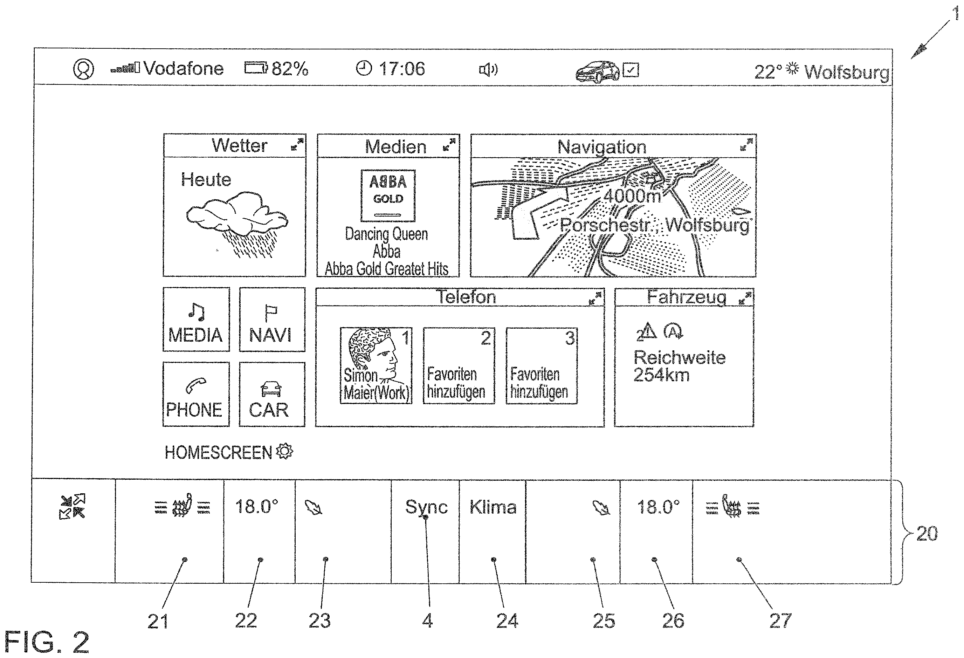

Figur 2 zeigt einen Screenshot 1 eines Bildschirmmenüs eines Ausführungsbeispiels einer erfindungsgemäßen Anwenderschnittstelle. In einer Sockelleiste 20 sind eine Schaltfläche 21 zur Bedienung einer Sitzheizung 13 der Fahrerseite, eine Schaltfläche 22 zur Einstellung einer Temperatur für die Fahrerseite, eine Schaltfläche 23 zur Aktivierung eines sanften Modus für die Klimatisierungseinstellungen der Fahrerseite, eine vordefinierte Schaltfläche 4 zur Synchronisierung der Anpassung von Einstellungen für die Fahrer- und die Beifahrerseite, eine Schaltfläche 24 für die Aktivierung einer Klimaanlage, eine Schaltfläche 25 für die Aktivierung eines sanften Modus für die Klimatisierungseinstellungen der Beifahrerseite, eine Schaltfläche 26 zur Einstellung einer Temperatur für die Beifahrerseite und eine Schaltfläche 27 für die Einstellung einer Sitzheizung 13 für die Beifahrerseite.

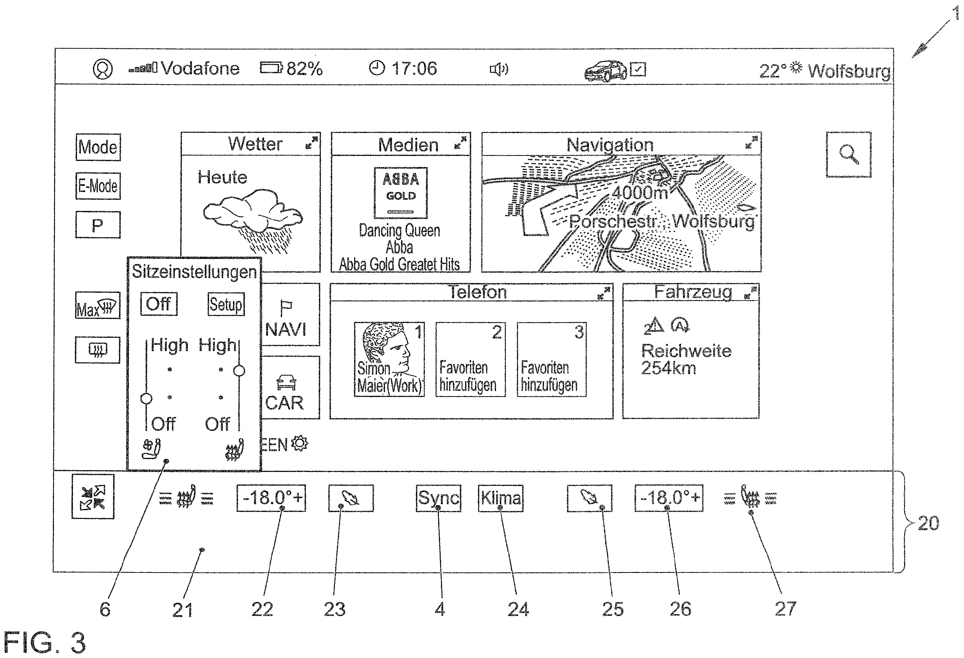

Figur 3 zeigt einen Screenshot nach einer Betätigung der Schaltfläche 21 durch eine Anwendereingabe, im Ansprechen worauf ein erstes Bedienelement 6 in Form zweier Schieberegler und zweier Schaltflächen als Pop-up in der linken Hälfte der Anzeige dargestellt wird. Die zur Verfügung gestellten Einstellungen beziehen sich auf eine Sitzlüftung und eine Sitzheizungsfunktion, jeweils für die Fahrersitzposition 8. Über die beiden Schieberegler können Luftströmung und Heizleistung unabhängig voneinander eingestellt werden.

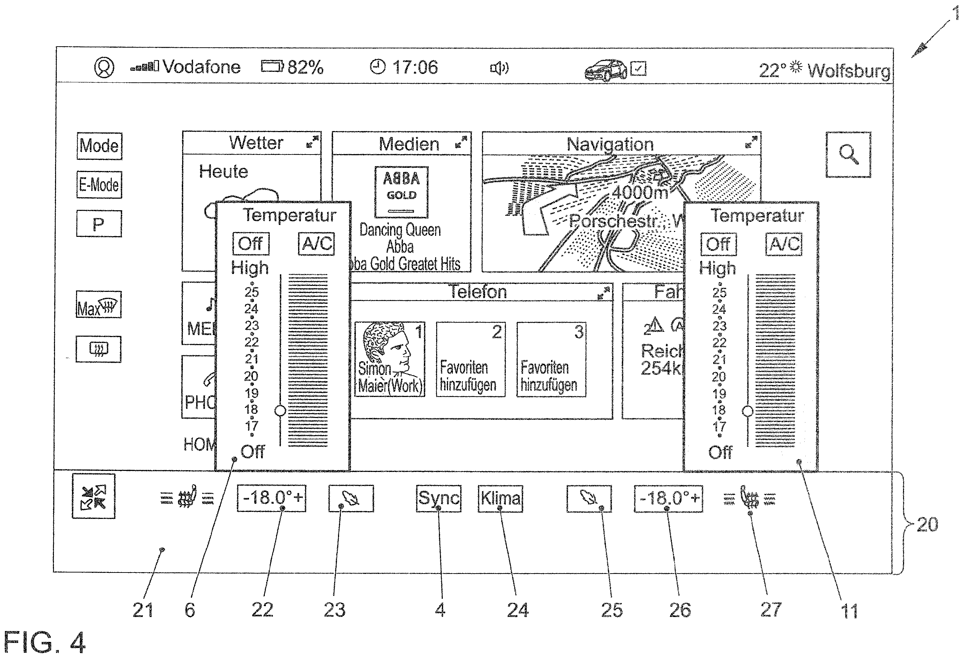

Figur 4 zeigt eine Situation nach einer Anwendereingabe bezüglich der Schaltfläche 22 bzw. 26. Das erste Bedienelement 6 bzw. das dritte Bedienelement 11 stellt jeweils einen Schieberegler zum Einstellen einer fahrer- bzw. beifahrerseitigen Temperatur sowie zwei Schaltflächen zum Einschalten bzw. Ausschalten der Klimaanlage dar.

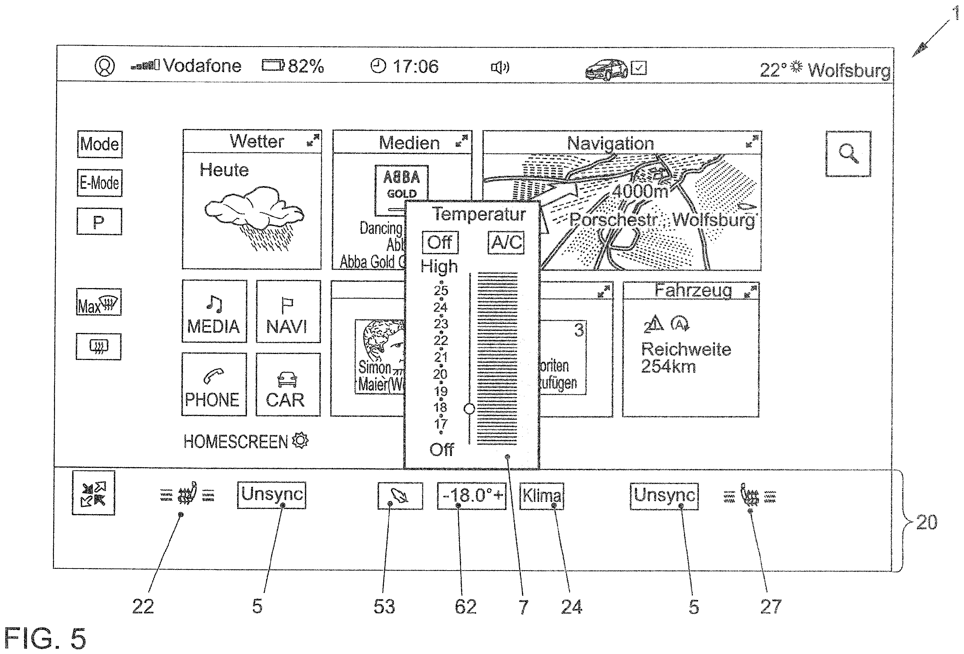

Figur 5 zeigt die in Figur 4 dargestellte Bildschirmansicht nach einer Anwendereingabe bezüglich der vordefinierten Schaltfläche 4. Im Ansprechen hierauf wird die Darstellung des ersten Bedienelementes 6 und die Darstellung des dritten Bedienelementes 11 unterdrückt und ein zweites Bedienelement 7 an einer zentralen Position der Anzeigeeinheit dargestellt. Die Erscheinungsform des zweiten Bedienelementes 7 entspricht derjenigen des ersten Bedienelementes 6 bzw. des dritten Bedienelementes 11. Anwendereingaben werden nun jedoch sowohl zur Anpassung der Temperatur der Fahrerposition 8 als auch der Beifahrerposition 9 verwendet. Eine separate Einstellung über separate Bedienelemente 6, 11 ist somit nicht mehr erforderlich. In der Sockelleiste 20 werden nur noch eine Schaltfläche 53 zur Aktivierung eines sanften Modus für die Klimatisierungseinstellungen und eine Schaltfläche 62 zur Einstellung einer Innenraumsolltemperatur dargestellt. Zum Auflösen der Synchronisierung werden jeweils fahrer- und beifahrerseitig in der Sockelleiste 20 zweite vordefinierte Schaltflächen 5 angezeigt. Im Ansprechen auf eine Anwendereingabe bezüglich der zweiten vordefinierten Schaltflächen 5 wird die Darstellung des zweiten Bedienelementes 7 unterdrückt und das erste Bedienelement 6 sowie das dritte Bedienelement 11 wie ursprünglich dargestellt. Nun kann eine fahrzeugseitenspezifische Anpassung der Temperatur- und Klimaeinstellung vorgenommen werden.

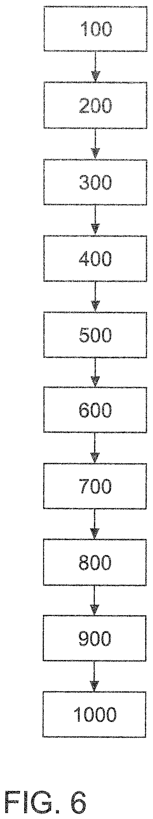

Figur 6 zeigt Schritte eines Ausführungsbeispiels eines erfindungsgemäßen Verfahrens. Dieses wird auf einer erfindungsgemäßen Anwenderschnittstelle mit einer Anzeigeeinheit und einer berührungsempfindlichen Oberfläche als Eingabeeinheit ausgeführt. In einem ersten Schritt 100 wird ein erstes Bedienelement zur Bedienung der Einstellung für die Fahrerseite/position oder für die Beifahrerseite/position des Fortbewegungsmittels auf der Anzeigeeinheit dargestellt. Das Bedienelement kann beispielsweise als Schieberegler zum Anpassen einer Temperatur und/oder einer Luftströmungsgeschwindigkeit ausgestaltet sein. In einem zweiten Schritt 200 wird ein drittes Bedienelement zur Bedienung der Einstellung für eine nicht durch das erst Bedienelement bedienbare Seite/Position des Fortbewegungsmittels dargestellt. Das dritte Bedienelement kann beispielsweise entsprechend dem ersten Bedienelement ausgestaltet und einer gegenüberliegenden Seite der Anzeigeeinheit zugeordnet sein. In einem dritten Schritt 300 wird eine Annäherung eines Anwenders an einen Eingabebereich der Anwenderschnittstelle erkannt, im Ansprechen worauf in Schritt 400 eine vordefinierte Schaltfläche zum Synchronisieren einer Anpassung der Einstellung auf der Anzeigeeinheit dargestellt wird. In Schritt 500 wird eine Anwendereingabe bezüglich der vordefinierten Schaltfläche festgestellt, im Ansprechen worauf in Schritt 600 ein zweites Bedienelement zur Bedienung der Einstellung für die Fahrerseite und zusätzlich für die Beifahrerseite des Fortbewegungsmittels dargestellt wird. Im selben Schritt wird die Darstellung des ersten Bedienelementes und des dritten Bedienelementes unterdrückt, um den Anwender nicht durch zu viele dargestellte Bedienelemente zu verwirren. In Schritt 700 wird eine Eingabe bezüglich einer zweiten, auf der Anzeigeeinheit angezeigten vordefinierten Schaltfläche empfangen und im Ansprechen darauf in Schritt 800 erneut das erste Bedienelement und in Schritt 900 erneut das dritte Bedienelement dargestellt. Anschließend wird in Schritt 1000 die Darstellung des zweiten Bedienelementes unterdrückt, um den Anwender nicht zu verwirren und die verfügbare Oberfläche auf der Anzeigeeinheit in anderer Weise zu verwenden.

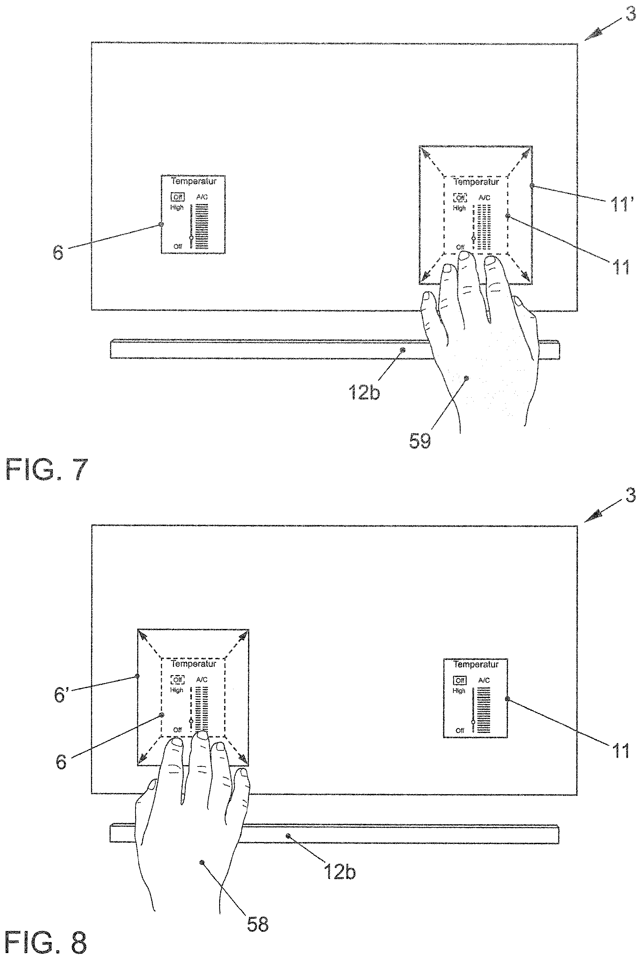

Figur 7 zeigt einen Bedienschritt einer erfindungsgemäßen Anwenderschnittstelle, bei welcher die Annäherung der Hand 59 eines Beifahrers an einen Bildschirm 3 mittels einer Infrarot-LED-Leiste 12b erkannt wird. Über die Hand 59 des Beifahrers wird die Eingabe der Beifahrerseite zugeordnet, weshalb ein erster Slider 6 als erstes Bedienelement für die Anpassung der Einstellung der Fahrerseite unverändert dargestellt wird. Ein ehemals in identischer Größe dargestellter Slider 11 als drittes Bedienelement wird im Ansprechen auf die erkannte Annäherung als vergrößerter Slider 11' dargestellt. Derjenige Bereich der Oberfläche des Bildschirms 3, welcher dem Slider 11' zugeordnet ist, vergrößert sich somit, wodurch dessen Bedienung durch den Anwender sich vereinfacht und daher genauer vorgenommen werden kann.

Figur 8 zeigt eine der Figur 7 entsprechende Veranschaulichung eines Bedienschrittes einer erfindungsgemäßen Anwenderschnittstelle, bei welchem eine Annäherung der Hand 58 des Fahrers an den Bildschirm 3 als Anzeigeeinheit erkannt wird. Im Unterschied zum in Figur 7 dargestellten Verfahren wird nicht der Slider 11 als drittes Bedienelement, sondern der Slider 6 als erstes Bedienelement vergrößert, was zur Darstellung des vergrößerten Sliders 6' führt. Während der Annäherung wird dem Fahrer auf diese Weise signalisiert, dass sich der vergrößerte Slider 6' anbietet, die Anpassung der Einstellung für die Fahrerseite vorzunehmen.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Screenshot
- 2: Anwenderschnittstelle
- 3: Bildschirm
- 4: erste vordefinierte Schaltfläche
- 5: zweite vordefinierte Schaltfläche
- 6: erstes Bedienelement
- 6': vergrößerte Darstellung des ersten Bedienelementes
- 7: zweites Bedienelement
- 8: Fahrerseite
- 9: Beifahrerseite
- 10: Pkw
- 11: drittes Bedienelement
- 11': vergrößerte Darstellung des dritten Bedienelementes
- 12a: berührungsempfindliche Oberfläche
- 12b: Infrarot-LED-Leiste
- 13: Sitzheizung
- 14: Rückenlehnenheizung
- 15: Heizstrahler
- 16: Heizlüfter
- 17: Frischluftzufuhr
- 18: 3D-Erfassungsbereich
- 19: elektronisches Steuergerät, Auswerteeinheit
- 20: Sockelleiste
- 21, 22, 23, 24, 25, 26, 27, 53, 62: Schaltflächen
- 58: Hand des Fahrers
- 59: Hand des Beifahrers
- 100 - 1000: Verfahrensschritte

## Patentansprüche

1. Verfahren zum Anpassen einer Einstellung eines Fortbewegungsmittels (10) mittels einer Anzeigeeinheit (3) einer Anwenderschnittstelle (2) des Fortbewegungsmittels (10) umfassend die Schritte:
- Erkennen einer Annäherung eines Anwenders an die Anwenderschnittstelle (2) **gekennzeichnet durch**
- Unterscheiden, ob sich ein Fahrer des Fortbewegungsmittels (10) an den Eingabebereich der Anwenderschnittstelle (2) nähert oder ob sich ein Beifahrer des Fortbewegungsmittels (10) an den Eingabebereich der Anwenderschnittstelle (2) nähert und im Ansprechen darauf
- Darstellen (100) eines ersten Bedienelementes (6), insbesondere eines Schiebereglers, zur Bedienung der Einstellung für die Fahrerposition (8) bzw.
eines dritten Bedienelementes (11), insbesondere eines Schiebereglers, zur Bedienung der Einstellung für die Beifahrerposition (9) des Fortbewegungsmittels (10) auf der Anzeigeeinheit (3).

2. Verfahren zum Anpassen einer Einstellung eines Fortbewegungsmittels (10) mittels einer Anzeigeeinheit (3) einer Anwenderschnittstelle (2) des Fortbewegungsmittels (10) umfassend die Schritte:
- Darstellen (100) eines ersten Bedienelementes (6) zur Bedienung der Einstellung für die Fahrerposition (8) und eines dritten Bedienelementes (11) zur Bedienung der Einstellung für die Beifahrerposition (9) des Fortbewegungsmittels (10) auf der Anzeigeeinheit (3), **gekennzeichnet durch**
- Empfangen (500) einer Anwendereingabe bezüglich des ersten Bedienelementes (6) und zeitgleiches
- Empfangen (500) einer Anwendereingabe bezüglich des dritten Bedienelementes (11), und im Ansprechen darauf
- Anpassen der Einstellung für die Fahrerseite (8) und die Beifahrerseite (9) in Abhängigkeit der jeweiligen Anwendereingabe unabhängig voneinander.

3. Verfahren nach einem der Ansprüche 1 und 2 weiter umfassend den Schritt
- Unterdrücken (600) der Darstellung des ersten Bedienelementes (6) und/oder des dritten Bedienelementes (11).

4. Verfahren nach einem der vorstehenden Ansprüche, wobei
- das erste Bedienelement (6) an einer ersten, insbesondere dezentralen, Position auf der Anzeigeeinheit (3) und/oder
- das zweite Bedienelement (7) an einer zweiten, insbesondere zentralen, Position auf der Anzeigeeinheit (3) dargestellt wird.

5. Verfahren nach einem der vorstehenden Ansprüche, wobei die Einstellung mindestens eine Funktion aus der nachfolgenden Liste umfasst:
- Heizlüftung (16),
- Sitzheizung (13),
- Rückenlehnenheizung (14),
- Heizstrahler (15),
- Frischluftzufuhr (17),
- Umluftfunktion,
- Sitzflächenklimatisierung.

6. Verfahren nach einem der vorstehenden Ansprüche, weiter umfassend die Schritte
- Erkennen (300) einer Annäherung eines Fahrers des Fortbewegungsmittels (10) an einen Eingabebereich (18) der Anwenderschnittstelle (3), und im Ansprechen darauf
- vergrößertes Darstellen (400) der ersten vordefinierten Schaltfläche (4),
und/oder
- Erkennen (300) einer Annäherung eines Beifahrers des Fortbewegungsmittels (10) an einen Eingabebereich (18) der Anwenderschnittstelle (3), und im Ansprechen darauf
- vergrößertes Darstellen (400) der dritten vordefinierten Schaltfläche (5).

7. Verfahren nach einem der vorstehenden Ansprüche, wobei das Bedienelement (6, 7, 11) einen Schieberegler und/oder eine Inkrementiertaste und eine Dekrementiertaste umfasst.

8. Anwenderschnittstelle für ein Fortbewegungsmittel (10) umfassend
- eine Anzeigeeinheit (3), welche eingerichtet ist,
- ein erstes Bedienelement (6) zur Bedienung einer Einstellung für eine Fahrerposition (8) oder für eine Beifahrerposition (9) des Fortbewegungsmittels (10) und
- eine erste vordefinierte Schaltfläche (4)
darzustellen,
- eine Eingabeeinheit (12a), welche eingerichtet ist, eine Anwendereingabe bezüglich der ersten vordefinierten Schaltfläche (4) zu erfassen, wobei die Anzeigeeinheit (3) weiter eingerichtet ist,
- im Ansprechen auf das Erfassen der Anwendereingabe ein zweites Bedienelement (7) zur Bedienung der Einstellung für die Fahrerposition (8) und die Beifahrerposition (9) des Fortbewegungsmittels (10) darzustellen,
wobei die Anwenderschnittstelle eingerichtet ist, ein Verfahren nach einem der Ansprüche 1 bis 7 durchzuführen.

9. Computerprogrammprodukt umfassend Instruktionen oder Signalfolge repräsentierend Instruktionen, welche, wenn Sie auf einem programmierbaren elektronischen Steuergerät (19) einer Anwenderschnittstelle (2) nach einem der Ansprüche 8 oder 9 ausgeführt werden, das elektronische Steuergerät (19) veranlassen, die Schritte eines Verfahrens nach einem der Ansprüche 1 bis 7 durchzuführen.

10. Fortbewegungsmittel, insbesondere Fahrzeug, bevorzugt ein PKW, ein Transporter, ein LKW, ein Luft- und/oder Wasserfahrzeug, umfassend eine Anwenderschnittstelle (3) nach Anspruch 8.

## Claims

1. Method for adjusting a setting for a means of transport (10) by means of a display unit (3) of a user interface (2) of the means of transport (10), comprising the steps:
- detecting the approach of a user to the user interface (2), **characterized by**
- differentiating whether a driver of the means of transport (10) approaches the input area of the user interface (2) or whether a co-driver of the means of transport (10) approaches the input area of the user interface (2), and in response thereto
- displaying (100) a first operator control element (6), in particular a slide control, for controlling the setting for the driver's position (8), or displaying (100) a third operator control element (11), in particular a slide control for controlling the setting for the co-driver's position (9) of the means of transport (10) on the display unit (3).

2. Method for adjusting a setting for a means of transport (10) by means of a display unit (3) of a user interface (2) of the means of transport (10), comprising the steps:
- displaying (100) of a first operator control element (6) for controlling the setting for the driver's position (8) and displaying (100) a third operator control element (11) for controlling the setting for the co-driver's position (9) of the means of transport (10) on the display unit (3), **characterized by**
- receiving (500) a user input relating to the first operator control element (6) and simultaneously
- receiving (500) a user input relating to the third operator control element (11), and in response thereto
- adjusting the setting for the driver's side (8) and the co-driver's side (9) independently of one another, as a function of the respective user input.

3. Method according to one of Claims 1 and 2, also comprising the step:
- suppressing (600) the display of the first operator control element (6) and/or the third operator control element (11).

4. Method according to one of the preceding claims, wherein
- the first operator control element (6) is displayed at a first, in particular decentralized, position on the display unit (3) and/or
- the second operator control element (7) is displayed at a second, in particular central, position on the display unit (3).

5. Method according to one of the preceding claims, wherein the setting comprises at least a function from the following list:
- heating/ventilation (16),
- seat heater (13),
- backrest heater (14),
- radiant heater (15),
- fresh air supply (17),
- recirculation function, and
- car seat climate control.

6. Method according to one of the preceding claims, also comprising the steps:
- detecting (300) the approach of a driver of the means of transport (10) to an input area (18) of the user interface (3), and in response thereto
- enlarged display (400) of the first predefined control button (4),
and/or
- detecting (300) the approach of a co-driver of the means of transport (10) to an input area (18) of the user interface (3), and in response thereto
- enlarged display (400) of the third predefined control button (5).

7. Method according to one of the preceding claims, wherein the operator control element (6, 7, 11) comprises a slide control and/or an incrementation pushbutton key and a decrementation pushbutton key.

8. User interface for a means of transport (10) comprising
- a display unit (3) which is configured to display
- a first operator control element (6) for controlling a setting for a driver's position (8) or for a co-driver's position (9) of the means of transport (10), and
- a first predefined control button (4),
- a display unit (12a) which is configured to detect a user input relating to the first predefined control button (4), wherein the display unit (3) is also configured
- to display, in response to the detection of the user input, a second operator control element (7) for controlling the setting for the driver's position (8) and the co-driver's position (9) of the means of transport (10),
wherein the user interface is configured to carry out a method according to one of Claims 1 to 7.

9. Computer program product comprising instructions or a signal sequence representing instructions which, when executed on a programmable electronic control unit (19) of a user interface (2) according to one of Claims 8 and 9, cause the electronic control unit (19) to carry out the steps of a method according to one of Claims 1 to 7.

10. Means of transport, in particular a vehicle, preferably a passenger car, a van, a lorry, an aircraft and/or watercraft, comprising a user interface (3) according to Claim 8.

## Revendications

1. Procédé d'adaptation d'un réglage d'un moyen de locomotion (10) à l'aide d'une unité d'affichage (3) d'une interface utilisateur (2) du moyen de locomotion (10), comportant les étapes de :
- détection d'une approche d'un utilisateur de l'interface utilisateur (2), **caractérisé par**
- le fait de distinguer si un conducteur du moyen de locomotion (10) s'approche de la zone d'entrée de l'interface utilisateur (2) ou si un passager avant du moyen de locomotion (10) s'approche de la zone d'entrée de l'interface utilisateur (2), et en réponse à cela
- la représentation (100), sur l'unité d'affichage (3), d'un premier élément de commande (6), en particulier d'un curseur, pour la commande du réglage de la position du conducteur (8) ou d'un troisième élément de commande (11), en particulier d'un curseur, pour la commande du réglage de la position du passager avant (9) du moyen de locomotion (10).

2. Procédé d'adaptation d'un réglage d'un moyen de locomotion (10) à l'aide d'une unité d'affichage (3) d'une interface utilisateur (2) du moyen de locomotion (10), comportant les étapes de :
- représentation (100), sur l'unité d'affichage (3), d'un premier élément de commande (6) pour la commande du réglage de la position du conducteur (8) ou d'un troisième élément de commande (11) pour la commande du réglage de la position du passager avant (9) du moyen de locomotion (10), **caractérisé par**
- la réception (500) d'une entrée d'utilisateur concernant le premier élément de commande (6) et
- la réception (500) simultanée d'une entrée d'utilisateur concernant le troisième élément de commande (11), et en réponse à cela
- l'adaptation du réglage pour le côté du conducteur (8) et le côté du passager avant (9) en fonction de l'entrée d'utilisateur respective indépendamment l'un de l'autre.

3. Procédé selon l'une des revendications 1 et 2, comportant en outre l'étape de
- suppression (600) de la représentation du premier élément de commande (6) et/ou du troisième élément de commande (11).

4. Procédé selon l'une des revendications précédentes, dans lequel
- le premier élément de commande (6) est représenté sur l'unité d'affichage (3) à une première position en particulier décentrée et/ou
- le deuxième élément de commande (7) est représenté sur l'unité d'affichage (3) à une deuxième position en particulier centrale.

5. Procédé selon l'une des revendications précédentes, dans lequel le réglage comporte au moins une fonction parmi la liste suivante :
- ventilation de chauffage (16),
- chauffage de siège (13),
- chauffage de dossier (14),
- radiateur chauffant (15),
- alimentation en air frais (17),
- fonction de circulation d'air,
- climatisation de surface de siège.

6. Procédé selon l'une des revendications précédentes, comportant en outre les étapes de
- détection (300) d'une approche d'un conducteur du moyen de locomotion (10) d'une zone d'entrée (18) de l'interface utilisateur (3), et en réponse à cela
- représentation agrandie (400) de la première surface de commutation prédéfinie (4), et/ou
- détection (300) d'une approche d'un passager avant du moyen de locomotion (10) d'une zone d'entrée (18) de l'interface utilisateur (3), et en réponse à cela
- représentation agrandie (400) de la troisième surface de commutation prédéfinie (5).

7. Procédé selon l'une des revendications précédentes, dans lequel l'élément de commande (6, 7, 11) comporte un curseur et/ou une touche d'incrémentation et une touche de décrémentation.

8. Interface utilisateur pour un moyen de locomotion (10), comportant
- une unité d'affichage (3), laquelle est conçue pour représenter
- un premier élément de commande (6) pour la commande d'un réglage d'une position de conducteur (8) ou d'une position de passager avant (9) du moyen de locomotion (10) et
- une première surface de commutation prédéfinie (4),
- une unité d'entrée (12a), laquelle est conçue pour détecter une entrée d'utilisateur concernant la première surface de commutation prédéfinie (4), dans laquelle l'unité d'affichage (3) est en outre conçue pour représenter,
- en réponse à la détection de l'entrée d'utilisateur, un deuxième élément de commande (7) pour la commande du réglage de la position de conducteur (8) et de la position de passager avant (9) du moyen de locomotion (10),
dans lequel l'interface utilisateur est conçue pour mettre en œuvre un procédé selon l'une des revendications 1 à 7.

9. Produit-programme d'ordinateur comportant des instructions ou des séquences de signaux représentant des instructions, lequel, lorsqu'il est exécuté sur un appareil de commande électronique programmable (19) d'une interface utilisateur (2) selon l'une des revendications 8 ou 9, amène l'appareil de commande électronique (19) à mettre en œuvre les étapes d'un procédé selon l'une des revendications 1 à 7.

10. Moyen de locomotion, en particulier véhicule, de préférence voiture particulière, véhicule utilitaire, poids lourds, aéronef et/ou véhicule marin, comportant une interface utilisateur (3) selon la revendication 8.
